# EUROPÄISCHE PATENTSCHRIFT

(11) **EP 2 255 319 B1**
(45) Veröffentlichungstag und Bekanntmachung des Hinweises auf die Patenterteilung: **17.10.2012**
(21) Anmeldenummer: 08870860.7
(22) Anmeldetag: 20.12.2008
(51) Int. Cl.: G06K 7/00, G06N 7/02, G07F 17/32

(54) **VORRICHTUNG ZUM DARSTELLEN VON EREIGNISSEN**
DEVICE FOR REPRESENTING EVENTS
DISPOSITIF POUR LA REPRÉSENTATION D'ÉVÉNEMENTS

(30) Priorität: 15.01.2008 DE 102008004560
(43) Veröffentlichungstag der Anmeldung: 01.12.2010
(73) Patentinhaber: Harbig, Tim, 44267 Dortmund (DE)
(72) Erfinder: NIEHAUS, Thomas, 44269 Dortmund (DE)
(74) Vertreter: Kiessling, Christian
(86) Internationale Anmeldenummer: PCT/DE2008/002142
(87) Internationale Veröffentlichungsnummer: WO 2009/089815

(56) Entgegenhaltungen:
- EP-A- 1 239 402
- EP-A- 1 628 271

## Beschreibung

Die Erfindung betrifft eine Vorrichtung zum Auswählen einer in digitaler Form gespeicherten Mustervorlage (160) aus einer Mehrzahl in digitaler Form gespeicherter Mustervorlagen und Darstellen der ausgewählten Mustervorlage auf einer Ausgabeeinheit im Nachgang zu einem Erkennen einer auf einem Informationsträger gespeicherten Kennung mittels einer Erfassungseinrichtung, mit einer Zuordnungseinrichtung , die einer eingelesenen Kennung eine Ereigniszahl zuordnet, wobei die Zuordnungseinrichtung (120) für einen grundlegenden Zuordnungsvorgang als Zufallsgenerator ausgelegt ist, der für eine jeweils gleiche Kennung unterschiedliche, mit vorgebbaren Wahrscheinlichkeiten gewichtete Ereigniszahlen generiert. Vorrichtungen der eingangs genannten Art werden im Stand der Technik verwendet, um beispielsweise zum Verkauf angebotenen Gegenständen über den Barcode mit Hilfe einer Barcode-Leseeinrichtung sehr schnell einen Preis in eine Kassenmaschine einlesen zu können. Dabei ist einem Barcode eine Zahl zugeordnet, die einem Verkaufspreis eines dargebotenen Gegenstandes entspricht. Die bekannten Vorrichtungen weisen hingegen sämtlich den Nachteil auf, dass einem Barcode nicht unterschiedliche Ereignisse zuordenbar sind.

EP 1 239 402 offenbart eine Codelesevorrichtung mit einem Leseabschnitt zum optischen Lesen eines optisch lesbaren Codes von einem Aufzeichnungsmedium, auf dem Daten als der optisch lesbare Code aufgezeichnet sind, und einem Ausgabeabschnitt zum Durchführen einer Ausgabe auf der Grundlage des Ergebnisses des Codelesebetriebs des Leseabschnitts, weiter einem Zufallsausstattungsabschnitt zum Ausstatten des Ergebnisses des Codelesebetriebs des Leseabschnitts mit einer Zufälligkeit, wodurch die Ausgabe des Ausgabeabschnitts mit einer Zufälligkeit auf der Grundlage des Ergebnisses des Codelesebetriebs ausgestattet wird, wobei der Zufallsausstattungsabschnitt einen Parametererfassungsabschnitt zum Erfassen eines vorbestimmten Parameters während und betreffend des Codelesebetriebs enthält, der mit der Zufälligkeit auf der Grundlage des erfassten Parameters aus- gestattet wird, und wobei das Ergebnis, das mit der Zufälligkeit ausgestattet ist, dasselbe ist, wenn der Wert des erfassten Parameters derselbe ist.

EP 1 628 271 offenbart eine Karten-Verkaufsvorrichtung, die eine Karte verkauft, welche ein Aufzeichnungsmedium aufweist, auf dem Daten für ein Spiel aufgezeichnet sind, wobei die Vorrichtung enthält:
- ein Gehäuse, das einen Ausgabeport aufweist, durch den die Karte ausgegeben wird;
- eine Mehrzahl von Kartenspendern, die in dem Gehäuse vorgesehen sind und in denen die Karten aufgenommen sind;
- ein Karten-Führungselement, das die Karte, die durch den Kartenspender gespendet wird, zu dem Ausgabeport führt;
- eine Auswahleinheit, die einen der Mehrzahl von Kartenspendern auswählt, der die Karte spendet;
- eine Steuereinheit, die ein Spendesignal zu dem Kartenspender überträgt, der durch die Auswahleinheit ausgewählt wird. Dabei entspricht die Auswahl einer vorgegebenen Spendebedingung, so dass eine Spendewahrscheinlichkeit für einen ersten der Mehrzahl von Kartenspendern relativ niedrig ist und dass die Spendewahrscheinlichkeit für einen zweiten der Mehrzahl von Kartenspendern relativ hoch ist. Eine Betriebsart-Auswahleinheit wählt entweder eine Spiel-Betriebsart oder eine Karten-Kauf-Betriebsart aus, wenn die Karten-Verkaufsvorrichtung in einer Spielvorrichtung montiert ist, wobei die Steuereinheit das Spiel überspringt und ein Karten-Spendesignal überträgt, wenn die Kauf-Betriebsart ausgewählt ist, oder das Karten-Spendesignal am Ende des Spiels oder entsprechend dem Fortschritt des Spiels über- trägt, wenn die Spiel-Betriebsart ausgewählt ist.

Aufgabe der vorliegenden Erfindung ist es, eine Vorrichtung zu schaffen, bei der mittels eines Erkennens einer auf einem Informationsträger gespeicherten Kennung auch eine Mehrzahl alternativer Ereignisse erzeugbar ist.

Erfindungsgemäß wird diese Aufgabe dadurch gelöst, dass eine Vergleichseinrichtung vorgesehen ist, um jede Ereigniszahl mit jeder Musterzahl zu vergleichen und bei Übereinstimmung einer Ereigniszahl mit einer entsprechenden Musterzahl die der Musterzahl zugeordnete Mustervorlage für eine Ausgabe auf der Ausgabeeinheit freizugeben, wobei in der Zuordnungseinrichtung für einen weiteren Zuordnungsvorgang eine Mehrzahl von Zeitfenstern vorhergebbarer Dauer definierbar sind um zu einem oder mehr bestimmbaren Zeitpunkten innerhalb eines ersten Zeitfensters eine erste Ereigniszahl zu generieren und um zu einem oder mehr bestimmbaren Zeitpunkten innerhalb eines weiteren Zeitfensters eine weitere Ereigniszahl (130) zu generieren und wobei auf unterschiedliche Ereigniszahlen hin mit Hilfe des Zufallsgenerators unterschiedliche Musterzahlen generierbar sind und bei Übereinstimmung einer Ereigniszahl mit einer entsprechenden zufallsgenerierten Musterzahl eine dieser Musterzahl zugeordnete Mustervorlage für die Ausgabe auf der Ausgabeeinheit freigegeben wird.

Bevorzugte Ausführungsformen der Erfindung sind Gegenstand der Unteransprüche.

Bei der erfindungsgemäßen Vorrichtung wird durch die Merkmale, dass eine Vergleichseinrichtung vorgesehen ist, um jede Ereigniszahl mit jeder Musterzahl zu vergleichen und bei Übereinstimmung einer Ereigniszahl mit einer entsprechenden Musterzahl die der Musterzahl zugeordnete Mustervorlage für eine Ausgabe auf der Ausgabeeinheit freizugeben, wobei in der Zuordnungseinrichtung für einen weiteren Zuordnungsvorgang eine Mehrzahl von Zeitfenstern vorhergebbarer Dauer definierbar sind um zu einem oder mehr bestimmbaren Zeitpunkten innerhalb eines ersten Zeitfensters eine erste Ereigniszahl zu generieren und um zu einem oder mehr bestimmbaren Zeitpunkten innerhalb eines weiteren Zeitfensters eine weitere Ereigniszahl (130) zu generieren und wobei auf unterschiedliche Ereigniszahlen hin mit Hilfe des Zufallsgenerators unterschiedliche Musterzahlen generierbar sind und bei Übereinstimmung einer Ereigniszahl mit einer entsprechenden zufallsgenerierten Musterzahl eine dieser Musterzahl zugeordnete Mustervorlage für die Ausgabe auf der Ausgabeeinheit freigegeben wird, erreicht, dass die Möglichkeiten zur Ausgabe unterschiedlicher Mustervorlagen gegeben ist, wobei auch die Möglichkeiten einer deterministischen oder indeterministischen Auswahl von Mustervorlagen eingeschlossen ist. Eine Mustervorlage ist dabei nicht lediglich als eine grafische Vorlage zu interpretieren, die mittels der Ausgabeeinheit darstellbar ist, sondern sie ist insbesondere in einer breiten Auslegung auch als ein Steuersignal zum Auslösen oder Steuern eines vorgegebenen Vorgangs bzw. als Impuls zum Auslösen eines beliebigen vorgegebenen Prozessablaufes oder Prozesses zu verstehen.

Grundsätzlich kann der weitere Zuordnungsvorgang dem grundlegenden Zuordnungsvorgang vorgeschaltet oder alternativ auch nachgeschaltet sein.

Die unterschiedlichen Ereigniszahlen basieren in der Regel, indes nicht notwendigerweise, auf unterschiedlichen Kennungen. Es ist indes aber auch möglich, dass eine Mehrzahl unterschiedlicher Ereigniszahlen auf einer einzigen, gemeinsamen Kennung basieren.

Eine Mustervorlage ist gemäß einer einfachen Ausführung für eine Darstellung auf der Ausgabeeinheit als feststehende 2-dimensionale Grafik ausgebildet. Darüber hinaus kann eine Mustervorlage für eine Darstellung auf der Ausgabeeinheit insbesondere auch als zeitveränderliche, animierte 2-dimensionale Grafik oder als Kennung für einen RFID Chip ausgebildet sein. Eine Mustervorlage kann darüber hinaus insbesondere als ein Steuersignal zum Auslösen oder Steuern eines vorgegebenen Vorgangs bzw. als Impuls zum Auslösen eines beliebigen vorgegebenen Prozessablaufes oder Prozesses ausgebildet sein. Eine Mustervorlage ist vorzugsweise in einem elektronischen Speicher gespeichert. Als Vergleichseinrichtung ist vorzugsweise ein elektronisches Register vorgesehen.

Die Ausgabeeinheit kann beispielsweise von einem Monitor, einem Drucker, einer LED-Einrichtung oder von einem RFID-Sender (radio frequence identification) gebildet sein, oder auch von einer Steuerungseinheit für mechanische Zuordnungsprozesse gebildet sein.

Die auf dem Informationsträger gespeicherte Kennung kann beispielsweise als ein 1D bzw. Punkte-Barcode, als 2D bzw. Strich-Barcode, als 3d-Barcode oder auch als RFID-Kennung realisiert sein.

Die erfindungsgemäße Vorrichtung wird im Folgenden anhand einer bevorzugten Ausführungsform erläutert, die in der Figur der Zeichnung dargestellt ist. Darin zeigt:

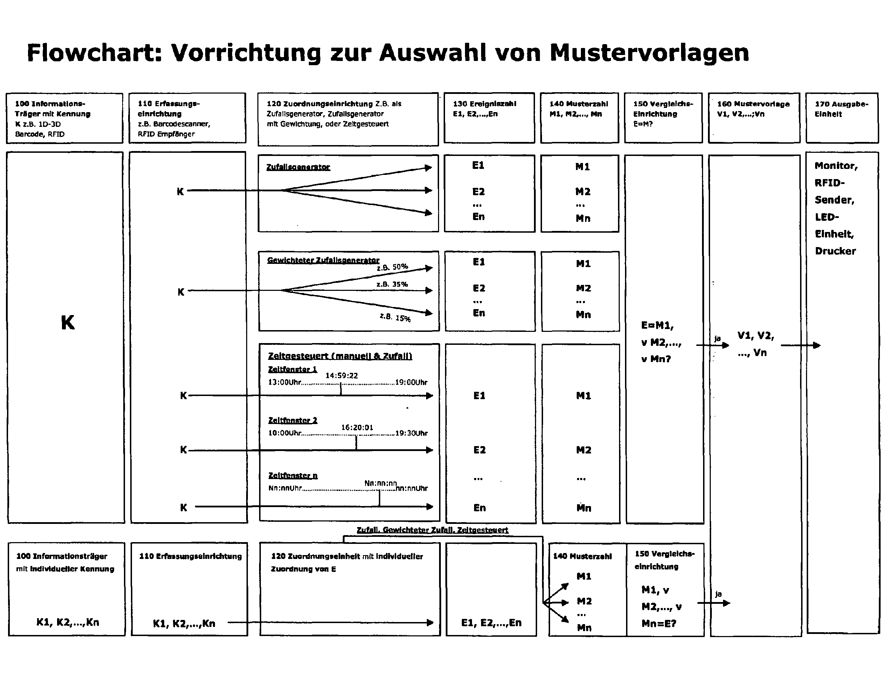

- Fig. 1: eine bevorzugte Ausführungsform der erfindungsgemäßen Vorrichtung in Form einer schematischen Blockdarstellung.

Die in Figur 1 dargestellte erfindungsgemäße Vorrichtung ist zum Auswählen einer in digitaler Form gespeicherten Mustervorlage (160) aus einer Mehrzahl in digitaler Form gespeicherter Mustervorlagen (V1, V2,...,Vn) und zum Darstellen der ausgewählten Mustervorlage (160) auf einer Ausgabeeinheit (170) im Nachgang zu einem Erkennen einer auf einem Informationsträger (100) gespeicherten Kennung mittels einer Erfassungseinrichtung (110) ausgelegt, und enthält eine Zuordnungseinrichtung (120) ist, um einer eingelesenen Kennung eine Ereigniszahl (130) zuzuordnen.

Die Zuordnungseinrichtung (120) ist für einen grundlegenden Zuordnungsvorgang als Zufallsgenerator ausgelegt, der für eine jeweils gleiche Kennung (100) unterschiedliche, mit vorgebbaren Wahrscheinlichkeiten gewichtete Ereigniszahlen (E1, E2,..., En) generiert.

Eine Vergleichseinrichtung (150) ist vorgesehen, um jede Ereigniszahl (130) mit jeder Musterzahl (140) zu vergleichen und bei Übereinstimmung einer Ereigniszahl (130) mit einer entsprechenden Musterzahl (140) die der Musterzahl zugeordnete Mustervorlage (160) für eine Ausgabe auf der Ausgabeeinheit (170) freizugeben.

In der Zuordnungseinrichtung sind für einen weiteren Zuordnungsvorgang eine Mehrzahl von Zeitfenstern vorhergebbarer Dauer definierbar und zu einem oder mehr bestimmbaren Zeitpunkten innerhalb eines ersten Zeitfensters ist eine erste Ereigniszahl (130) generierbar. Zu einem oder mehr bestimmbaren Zeitpunkten innerhalb eines weiteren Zeitfensters ist dabei eine weitere Ereigniszahl (130) generierbar. Dieser weitere Zuordnungsvorgang ist dem grundlegenden Zuordnungsvorgang vorgeschaltet.

Die unterschiedlichen Ereigniszahlen basieren zum Teil auf jeweils unterschiedlichen Kennungen, wobei die auf einem Informationsträger (100) gespeicherte Kennung in der vorliegenden Ausführung ein 2D Barcode ist. Eine Mustervorlage (160) ist als zeitveränderliche, animierte 2-dimensionale Grafik ausgebildet.

Als Vergleichseinrichtung (150) ist ein herkömmliches elektronisches Register vorgesehen, und eine Mustervorlage (160) ist in einem elektronischen Speicher gespeichert. Die Ausgabeeinheit (170) ist von einem Monitor gebildet.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vorrichtung zum Auswählen einer in digitaler Form gespeicherten Mustervorlage (160) aus einer Mehrzahl in digitaler Form gespeicherter Mustervorlagen und Darstellen der ausgewählten Mustervorlage (160) auf einer Ausgabeeinheit (170) im Nachgang zu einem Erkennen einer auf einem Informationsträger (100) gespeicherten Kennung mittels einer Erfassungseinrichtung (110), mit einer Zuordnungseinrichtung (120), die einer eingelesenen Kennung eine Ereigniszahl (130) zuordnet, wobei die Zuordnungseinrichtung (120) für einen grundlegenden Zuordnungsvorgang als Zufallsgenerator ausgelegt ist, der für eine jeweils gleiche Kennung (100) unterschiedliche, mit vorgebbaren Wahrscheinlichkeiten gewichtete Ereigniszahlen generiert, **dadurch gekennzeichnet, dass** eine Vergleichseinrichtung (150) vorgesehen ist, um jede Ereigniszahl (130) mit jeder Musterzahl (140) zu vergleichen und bei Übereinstimmung einer Ereigniszahl (130) mit einer entsprechenden Musterzahl (140) die der Musterzahl zugeordnete Mustervorlage (160) für eine Ausgabe auf der Ausgabeeinheit (170) freizugeben, wobei in der Zuordnungseinrichtung für einen weiteren Zuordnungsvorgang eine Mehrzahl von Zeitfenstern vorhergebbarer Dauer definierbar sind um zu einem oder mehr bestimmbaren Zeitpunkten innerhalb eines ersten Zeitfensters eine erste Ereigniszahl (130) zu generieren und um zu einem oder mehr bestimmbaren Zeitpunkten innerhalb eines weiteren Zeitfensters eine weitere Ereigniszahl (130) zu generieren und wobei auf unterschiedliche Ereigniszahlen hin mit Hilfe des Zufallsgenerators unterschiedliche Musterzahlen generierbar sind und bei Übereinstimmung einer Ereigniszahl (130) mit einer entsprechenden zufallsgenerierten Musterzahl (140) eine dieser Musterzahl (140) zugeordnete Mustervorlage (160) für die Ausgabe auf der Ausgabeeinheit(170) freigegeben wird.

2. Vorrichtung nach Anspruch 1, **dadurch gekennzeichnet, dass** der weitere Zuordnungsvorgang dem grundlegenden Zuordnungsvorgang vor- oder nachgeschaltet ist.

3. Vorrichtung nach einem der vorhergehenden Ansprüche, **dadurch gekennzeichnet, dass** die unterschiedlichen Ereigniszahlen auf unterschiedlichen Kennungen basieren.

4. Vorrichtung nach einem der Ansprüche 1 bis 3, **dadurch gekennzeichnet, dass** eine Mustervorlage (160) als feststehende oder als zeitveränderliche, animierte 2-dimensionale Grafik ausgebildet ist.

5. Vorrichtung nach einem der Ansprüche 1 bis 3, **dadurch gekennzeichnet, dass** eine Mustervorlage (160) als Kennung für einen RFID Chip ausgebildet ist.

6. Vorrichtung nach einem der Ansprüche 1 bis 3, **dadurch gekennzeichnet, dass** eine Mustervorlage (160) als ein Steuersignal zum Steuern eines vorgegebenen Prozesses ausgebildet ist.

7. Vorrichtung nach einem der vorhergehenden Ansprüche, **dadurch gekennzeichnet, dass** als Vergleichseinrichtung (150) ein elektronisches Register vorgesehen ist.

8. Vorrichtung nach einem der vorhergehenden Ansprüche, **dadurch gekennzeichnet, dass** eine Mustervorlage (160) in einem elektronischen Speicher gespeichert ist.

9. Vorrichtung nach einem der vorhergehenden Ansprüche, **dadurch gekennzeichnet, dass** die Ausgabeeinheit (170) von einem Monitor gebildet ist.

10. Vorrichtung nach einem der vorhergehenden Ansprüche, **dadurch gekennzeichnet, dass** die Ausgabeeinheit (170) von einem Drucker gebildet ist.

11. Vorrichtung nach einem der vorhergehenden Ansprüche, **dadurch gekennzeichnet, dass** die Ausgabeeinheit (170) von einem RFID-Sender (RFID = Radio Frequence Identification) gebildet ist.

12. Vorrichtung nach einem der vorhergehenden Ansprüche, **dadurch gekennzeichnet, dass** die auf dem Informationsträger (100) gespeicherte Kennung ein 1D Barcode ist.

13. Vorrichtung nach einem der vorhergehenden Ansprüche, **dadurch gekennzeichnet, dass** die auf Informationsträger (100) gespeicherte Kennung ein 2D Barcode ist.

14. Vorrichtung nach einem der vorhergehenden Ansprüche, **dadurch gekennzeichnet, dass** die auf Informationsträger (100) gespeicherte Kennung ein 3D-Barcode ist.

15. Vorrichtung nach einem der vorhergehenden Ansprüche, **dadurch gekennzeichnet, dass** die auf Informationsträger (100) gespeicherten Kennung eine RFID-Kennung ist.

## Claims

1. A device for selecting a template (160), stored in digital form, from a plurality of templates, stored in digital form, and for displaying the selected template (160) in an output unit following recognition of an identifier, stored on an information carrier, by means of a data acquisition device (110), comprising an allocating device (120), which assigns an event number (130) to a detected identifier, wherein the allocating device (120) for a fundamental allocating operation is in the form of a random number generator, which generates different event numbers (130) for each identical identifier, which event numbers (130) are weighted with predefined probabilities, **characterized in that** a comparing device 140) is provided for the purpose of comparing each event number (130) with each template number (140) and, in the case of conformity of an event number (130) with a corresponding template number (140), of releasing the template (160) assigned to the template number (140) for output in the output unit, wherein in the allocating device (120), a plurality of time windows of predefined duration are definable for a further allocating operation for the purpose of generating a first event number (130) at one or more determinable points of time within a first time window and for the purpose of generating a further event number (130) at one or more determinable points of time within a further time window, and, in response to varying event numbers (130), different template numbers (140) can be generated with the aid of the random number generator and, in the case of conformity of an event number (130) with a corresponding randomly generated template number (140), a template (160) assigned to this template number (140) is released for output in the output unit.

2. The device as defined in claim 1, **characterized in that** the further allocating operation takes place before or after the fundamental allocating operation.

3. The device as defined in any one of the previous claims, **characterized in that** the different event numbers (130) are based on different identifiers.

4. The device as defined in any one of claims 1 to 3, **characterized in that** the template (160) is in the form of a fixed or temporally varying, animated 2-dimensional graphical illustration.

5. The device as defined in any one of claims 1 to 3, **characterized in that** the template (160) is in the form of an identifier for an RFID chip.

6. The device as defined in any one of claims 1 to 3, **characterized in that** the template (160) is in the form of a control signal for controlling a specified process.

7. The device as defined in any one of the previous claims, **characterized in that** the comparing device (150) is an electronic register.

8. The device as defined in any one of the previous claims, **characterized in that** the template (160) is stored in an electronic memory.

9. The device as defined in any one of the previous claims, **characterized in** thin the output unit (170) is formed by a monitor.

10. The device as defined in any one of the previous claims, **characterized in** thin the output unit (170) is formed by a printer.

11. The device as defined in any one of the previous claims, **characterized in** thin the output unit (170) is an RFID (radio frequency identification) transmitter.

12. The device as defined in any one of the previous claims, **characterized in that** the identifier stored on the information carrier (100) is a 1-dimensional bar code.

13. The device as defined in any one of the previous claims, **characterized in that** the identifier stored on the information carrier (100) is a 2-dimensional bar code.

14. The device as defined in any one of the previous claims, **characterized in that** the identifier stored on the information carrier (100) is a 3-dimensional bar code.

15. The device as defined in any one of the previous claims, **characterized in that** the identifier stored on the information carrier (100) is an RFID code.

## Revendications

1. Dispositif de sélection, parmi une pluralité de modèles mémorisés sous forme numérique, d'un modèle (160) mémorisé sous forme numérique, et de représentation du modèle (160) sélectionné sur une unité de sortie (170) à la suite d'une reconnaissance, au moyen d'un dispositif de détection (110), d'un identificateur mémorisé sur un support d'informations (100), comprenant un dispositif d'affectation (120) qui affecte un nombre d'événements (130) à un identificateur lu, le dispositif d'affectation (120) étant conçu pour un processus fondamental d'affectation en tant que générateur de nombres aléatoires qui, pour un identificateur (100) respectivement identique, génère des nombres d'événements différents pondérés avec des probabilités pouvant être données, **caractérisé en ce qu'**un dispositif de comparaison (150) est prévu afin de comparer chaque nombre d'événements (130) avec chaque nombre modèle (140) et de, en cas de concordance d'un nombre d'événements (130) avec un nombre modèle correspondant (140), débloquer le modèle (160) affecté au nombre modèle pour une sortie sur l'unité de sortie (170), une pluralité de fenêtres de temps de durée préfixable étant définissables dans le dispositif d'affectation pour un processus subséquent d'affectation afin de générer un premier nombre d'événements (130) à un ou plusieurs instants déterminables compris dans une première fenêtre de temps et afin de générer un nombre subséquent d'événements (130) à un ou plusieurs instants déterminables compris dans une fenêtre de temps subséquente, et différents nombres modèles étant générables à la suite de différents nombres d'événements à l'aide du générateur de nombres aléatoires et, en cas de concordance d'un nombre d'événements (130) avec un nombre modèle (140) correspondant généré aléatoirement, un modèle (160) affecté à ce nombre modèle (140) étant débloqué pour la sortie sur l'unité de sortie (170).

2. Dispositif selon la revendication 1, **caractérisé en ce que** le processus subséquent d'affectation est ordonné en amont ou en aval du processus d'affectation fondamental.

3. Dispositif selon une des revendications précédentes, **caractérisé en ce que** les différents nombres d'événements sont basés sur des identificateurs différents.

4. Dispositif selon une des revendications de 1 à 3, **caractérisé en ce qu'**un modèle (160) se présente sous forme de graphique fixe ou bidimensionnel animé variant dans le temps.

5. Dispositif selon une des revendications de 1 à 3, **caractérisé en ce qu'**un modèle (160) se présente sous forme d'identificateur pour une puce RFID.

6. Dispositif selon une des revendications de 1 à 3, **caractérisé en ce qu'**un modèle (160) se présente sous forme d'un signal de commande destiné à commander un processus donné.

7. Dispositif selon une des revendications précédentes, **caractérisé en ce que** c'est un registre électronique qui est prévu en tant que dispositif de comparaison (150).

8. Dispositif selon une des revendications précédentes, **caractérisé en ce qu'**un modèle (160) est mémorisé dans une mémoire électronique.

9. Dispositif selon une des revendications précédentes, **caractérisé en ce que** l'unité de sortie (170) consiste en un écran.

10. Dispositif selon une des revendications précédentes, **caractérisé en ce que** l'unité de sortie (170) consiste en une imprimante.

11. Dispositif selon une des revendications précédentes, **caractérisé en ce que** l'unité de sortie (170) consiste en un émetteur RFID (RFID = Radio Frequence Identification).

12. Dispositif selon une des revendications précédentes, **caractérisé en ce que** l'identificateur mémorisé sur le support d'informations (100) est un code barre 1D.

13. Dispositif selon une des revendications précédentes, **caractérisé en ce que** l'identificateur mémorisé sur le support d'informations (100) est un code barre 2D.

14. Dispositif selon une des revendications précédentes, **caractérisé en ce que** l'identificateur mémorisé sur le support d'informations (100) est un code barre 3D.

15. Dispositif selon une des revendications précédentes, **caractérisé en ce que** l'identificateur mémorisé sur le support d'informations (100) est un identificateur RFID.
